# EUROPEAN PATENT APPLICATION

(11) **EP 1 933 278 A1**
(43) Date of publication of application: **18.06.2008**
(21) Application number: 06025926.4
(22) Date of filing: 14.12.2006
(51) Int. Cl.: G06T 11/00

(54) **Image fusion visualisation**

(71) Applicant: BrainLAB AG, 85622 Feldkirchen (DE)
(72) Inventor: Weissenborn, Anke, 80937 München (DE)
(74) Representative: Gassenhuber, Andreas

(57) **Abstract**

The invention concerns a method for displaying at least two different image series obtained from the same region of interest of an object, wherein the image series are fused to obtain the spatial relationship between the two image series, characterized in that a viewing or drawing operation on one image series is automatically performed on at least one other image series.

## Description

The present invention relates to an apparatus and a method for the visualisation of fused images.

In particular the present invention relates to the use of images or data sets obtained from at least two different diagnostic imaging apparatus. It finds particular application in conjunction with computer tomography (CT) scanners and magnetic resonance (MR) scanners. However, it is to be appreciated that the invention may also find application in conjunction with images created from positron emission scanner and other types of images of diagnostic imaging apparatus.

CT scanners define like other medical scanners an examination region or scan circle in which the patient or other subject to be imaged is disposed.

A beam of radiation is transmitted across the scan circle from an X-ray source to oppositely disposed radiation detectors. The segment of the beam impinging on a sampled detector defines a ray extending between the source and the sampled detector. The source or beam of radiation is rotated around the scan circle such that data from a multiplicity of rays crisscrossing the scan circle is collected. The sampled data is backprojected to an image memory which is commonly described as a two dimensional array of memory elements. Each memory element stores a CT number indicative of the transmission or attenuation of the rays attributable to a corresponding incremental element within the scan circle. The data from each ray which crossed a given incremental element of the scan circle contributes to the corresponding CT number, i.e. the CT number for each memory element of the resultant image is the sum of contributions from the multiplicity of rays which passed through the corresponding incremental element of the scan circle. This data is used to generate a three dimensional CT data set of the imaged examination region or scan circle.

Using such a three dimensional data set, a surgeon can examine a specific part of a body of a patient. However, CT scanners allow to detect e.g. bone structures with great detail, but have drawbacks if e.g. tissue structures should be examined.

To make additional information about the examination region or scan circle available for a surgeon, a different imaging modality, as e.g. magnetic resonance imaging (MRI), can be used to obtain a further three dimensional data set.

If a surgeon has to consider the data obtained from at least two different imaging modalities, it might be confusing for a surgeon to correlate the respective images from the different imaging modalities or obtained from the same imaging modality at two or more different times.

It is an object of the present invention to provide a method and an apparatus to improve the perception of three dimensional data sets obtained from at least two different imaging modalities.

This object is solved by the subject of the independent claims. Preferred embodiments are defined in the dependent claims.

According to the present invention a parallel aligned visualisation of multiple image series obtained from at least two different imaging modalities is provided, wherein the image series obtained from the different imaging modalities are preferably three dimensional data sets and are exactly fused in all three planes. An exact fusion can be obtained by automatic image fusion or manual exact alignment, which can be performed by an experienced person. After having the multiple image series exactly fused, at least one image series can be zoomed or scrolled for viewing in all three planes. According to the present invention the scrolling of one image series is automatically transferred or translated into the scrolling of one or more than one other image series, so that viewing operations such as scrolling or zooming performed on one image series is automatically performed in the other image series. Thus, if a surgeon scrolls and zooms to a specific region of interest in for example a CT data set, then the same region of interest is zoomed and scrolled to in one or more different, e.g. MR, data sets so that a surgeon can easily correlate the image information of two or more different data set.

In the same manner segmented objects, marks, points, lines, volumes or trajectories that have been calculated and/or drawn in one image series can be visualized in parallel in a different or multiple image series in all three planes or in 3D reconstructions.

It is also possible to switch objects on and off in parallel in all image series after such an operation is performed in only a single one of the fused different image series.

Thus, different image series of a patient can be easily visualized and aligned in an axial, coronal and sagittal view. This allows better evaluation of pathologies and important anatomical structures and easy and comfortable handling of the different image series. Segmented objects can easily be visualized in all three planes and within all available image series.

Increases in size and volume changes of certain areas or objects can easily be visualized or calculated according to the invention.

Intraoperative images can be matched and compared easily to pre-operative pictures. The matching of intraoperative images to pre-operative image series allows the convenient comparison of the operating room (OR)-progress.

According to a further aspect the invention relates to a method and an apparatus to improve the perception of three-dimensional data sets obtained from the same or different imaging modalities at two or more different times.

The above-mentioned process of a parallel aligned visualization of multiple image series can also be applied to image series obtained by the same or different imaging modalities, which image series were aquired at two or more different times.

This is of advantage if for example a first examination is made at a first time e.g. by taking an MR or CT scan and a second examination is made at a second time e.g. by taking again an MR or CT scan of the same body or structure to easily detect or visualize changes of the examined region or body. If for example a tumor is to be observed, the growth of the tumor can be visualized. The at least two image series obtained at two different times can be fused to improve the perception of the change of the imaged object or structure.

The term fusion as used in this application includes, but is not restricted to, the meaning of combining of sensory or image data or data derived from sensory or image data from separate sources or the same source at the same or different times, such that the resulting information is preferably in some sense better than would be possible when these sources were used individually or separately. The term better in that case can mean more accurate, more complete, or can refer to the result of an imaging view, such as stereoscopic vision. The data sources for the fusion process do not have to originate from identical sensors, as e.g. scanners or cameras, and information sources, like a priori knowledge about the environment and/or human input, can be used for fusion.

## Claims

1. Method for displaying at least two different image series obtained from the same region of interest of an object, wherein the image series are fused to obtain the spatial relationship between the two image series, **characterized in that** a viewing operation on one image series is automatically performed on the at least one other image series.

2. Method for displaying at least two different image series obtained from the same region of interest of an object according to claim 1, wherein the viewing operation is at least one of scrolling, turning or zooming.

3. Method for displaying at least two different image series obtained from the same region of interest of an object according to one of the preceding claims, wherein segmented objects or marks, point, lines or trajectories or other drawing objects or volumes calculated or three-dimensional objects that have been drawn or calculated in one image series are visualized in parallel in at least one other image series at the same anatomical area.

4. Method for displaying at least two different image series obtained from the same region of interest of an object according to one of the proceeding claims, wherein the switching on and off of segmented objects and drawn in objects in all images series is performed in parallel.

5. Computer program which, when loaded or running on a computer, performs the method of one of the preceding claims.

6. Program storage medium or computer program product comprising the program of the previous claim.

7. Apparatus for displaying at least two different image series obtained from the same region of interest of an object, comprising an image fusion means to fuse the image series to obtain the spatial relationship between the two image series, an operating means to perform viewing operations, as e.g. zooming, turning and scrolling and/or positioning tool to move or display a cursor or pointer, such as a mouse pointer, on at least one image series and automatic transfer means to automatically transfer a display or viewing or pointing operation on one image series to the at least one other image series.
